# EUROPEAN PATENT SPECIFICATION

(11) **EP 2 944 013 B1**
(45) Date of publication and mention of the grant of the patent: **13.10.2021**
(21) Application number: 13870421.8
(22) Date of filing: 27.12.2013
(51) Int. Cl.: B66B 1/30, H02J 9/06, H02J 7/35

(54) **ELECTRIC POWER SYSTEM**
STROMVERSORGUNGSSYSTEM
SYSTÈME D'ÉNERGIE ÉLECTRIQUE

(30) Priority: 09.01.2013 FI 20135025
(43) Date of publication of application: 18.11.2015
(73) Proprietor: KONE Corporation, 00330 Helsinki (FI)
(72) Inventor: HÄRKÖNEN, Ari, FI-11910 Riihimäki (FI)
(74) Representative: K & H Bonapat Patentanwälte Koch · von Behren & Partner mbB
(86) International application number: PCT/FI2013/051206
(87) International publication number: WO 2014/108599

(56) References cited:
- EP-A1- 1 931 587
- WO-A1-2007/145628
- WO-A1-2010/042118
- CN-A- 102 170 152
- CN-U- 202 535 108
- JP-A- H1 160 101
- JP-A- H07 232 872
- JP-A- 2001 258 258
- JP-A- 2002 369 387
- JP-A- 2011 097 822
- US-A- 5 929 538
- None

## Description

### Field of the invention

The invention relates to electric power systems, which supply electric power to the hoisting machines of elevators.

### Background of the invention

In a building there can be loads having an electricity supply desirably arranged to be uninterruptable. For example, it is often desired to arrange the electricity supply of elevators to be uninterruptable because a malfunction of the elevators following an electricity outage might cause significant harm, particularly to people living, or running errands, on the upper floors of the building.

In JP 2002 369387 A, a converter for a power source is composed of a forward conversion portion for converting AC power from a micro gas turbine generating set into DC power, and an inversion portion which converts the DC power supplied through the conversion portion or DC power regenerated from a motor for an elevator into AC power and is interconnected to a power distribution system. A connector for an elevator is composed of an inversion portion which converts the DC power supplied through the forward conversion portion, or DC power supplied from the power distribution system through the inversion portion into AC power, and drives the motor for an elevator. In the case where DC power is generated using a fuel cell, etc., by the generating set, the converter for a power source is composed of only the inversion portion. In WO 2010/042118 A1, the regenerative drive of an elevator system acts as a power conditioning interface to couple a wide range of power generation sources to a building power distribution system. An energy storage system can also be coupled to the regenerative drive. In WO 2007/145628 A1, an elevator hoist motor is driven by electrical energy storage modules that are controlled such that at least one electrical energy storage module drives the hoist motor and at least one electrical energy storage module charges. The elevator system described in WO 2007/042603 A1 is connected to an electricity distribution network of a building, which can further be connected either to a public electricity distribution network or to a reserve power appliance. The elevator system can be used both when the electricity network of the building is connected to the public electricity distribution network and when the electricity network of the building is connected to the reserve power appliance, and the elevator system comprises means for controlling the elevator such that when the electricity network of the building is connected to a reserve power system the power supplied by the elevator system towards the electricity network does not exceed a power limit that can be set for it.

An uninterruptable electricity supply is often arranged by connecting a UPS uninterruptible power supply to the electricity network of the building. In this case the large current consumption of the building might become a problem, owing to which also the UPS power supply becomes large in both power and size. Also the battery pack of a UPS power supply must often be dimensioned, owing to the high current consumption, to be of such a large size that it is difficult to find a suitable space for it in the building. Owing to the high current consumption, the battery pack also discharges quickly. A UPS power supply that is large in power and size also, of course, increases the costs of the electricity distribution system of a building.

### Aim of the invention

The aim of the present invention is to solve the aforementioned problems as well as the problems disclosed in the description below.

To achieve this aim the invention discloses an electric power system according to claim 1. The preferred embodiments of the invention are described in the dependent claims. Some inventive embodiments and inventive combinations of the various embodiments are also presented in the descriptive section and in the drawings of the present application.

### Summary of the invention

Disclosed is an electric power system in a building according to the invention as defined in claim 1, in which is a first electricity network provided with a reserve power device as well as a second electricity network, which at least during an electricity outage of the public electricity distribution network is isolated from the first electricity network in such a way that in this case a direct and uncontrolled flow of electric power does not occur from the first electricity network to the second electricity network. The electric power system comprises the drive motor of an elevator, which motor is configured to drive an elevator car in an elevator hoistway in response to elevator calls. The electric power system also comprises a power converter unit, which is connected to the first electricity network, to the second electricity network and to the drive motor of the elevator and is configured to supply electric power selectively between the first electricity network, the second electricity network and the drive motor of the elevator. Consequently, the flow of electric power can be adjusted in a controlled manner with the power converter unit according to the power requirement.

In one preferred embodiment the power converter unit is configured to supply electric power from the first electricity network to the drive motor of the elevator but to prevent the electricity supply from the second electricity network to the drive motor of the elevator during an electricity outage of the public electricity distribution network. Consequently, electric power can be supplied with the reserve power device to the elevator motor without overloading the reserve power device.

The power supply from the first electricity network to the drive motor of the elevator and also to the second electricity network can be controlled by the aid of the power converter unit. In one preferred embodiment those loads having an electricity supply intended to be uninterrupted are connected to the first electricity network and other electrical loads of the building are connected to the second electricity network. During an electricity distribution disturbance the power supply occurring from the first electricity network to the second electricity network can be reduced by the control of the power converter unit, e.g. as the current requirement of the drive motor of the elevator increases, in which case the first electricity network can also be dimensioned according to a smaller current requirement during an electricity distribution disturbance. Consequently, the dimensioning of the apparatus (uninterruptable power supply or corresponding) ensuring uninterrupted operation of the first electricity network can also be reduced.

In one preferred embodiment the power converter unit is configured to supply electric power selectively from the first electricity network to the second electricity network and also to the drive motor of the elevator. According to the invention the power converter unit is configured to prevent the power supply to the first electricity network. In this way, *inter alia*, the drive motor of the elevator can be prevented from returning power in connection with motor braking to the first electricity network. This is advantageous particularly in those systems in which the returning of power to the first electricity network might interfere with the operation of the uninterruptible power supply.

According to the invention the power converter unit is configured to supply electric power from the drive motor of the elevator to the second electricity network during motor braking of the elevator. In this way the electric power produced in connection with motor braking can be utilized as a power source for the loads connected to the second electricity network.

In one preferred embodiment one or more electricity sources functioning with renewable energy are connected to the second electricity network. In one preferred embodiment the aforementioned electricity source functioning with renewable energy comprises an accumulator. In one preferred embodiment the aforementioned electricity source functioning with renewable energy is a solar panel, which functions with the radiant energy of the sun. By utilizing renewable energy the power requirement from the public electricity network can be reduced.

In one preferred embodiment the power converter unit is equipped to supply electric power from the second electricity network to the drive motor of the elevator when renewable energy is available. In this case the drive motor of the elevator can be driven with the electric power available from the second electricity network, and more particularly with the electric power produced by an electricity source functioning with renewable energy.

In one preferred embodiment loads external to the elevator system are connected to the second electricity network. The aforementioned loads external to the elevator system can be e.g. the luminaires, air-conditioning devices, heating devices of the building as well as various household and consumer electronics devices.

In one preferred embodiment a safety system of the building is connected to the first electricity network. This type of solution enables an uninterrupted power supply of the safety system of the building.

In one preferred embodiment the power converter unit comprises controllable power semiconductors for adjusting the power flow occurring via the power converter unit. The aforementioned controllable power semiconductors can be e.g. IGBT transistors, MOSFET transistors, thyristors, bipolar transistors or corresponding controllable switches. These types of switches enable precise adjustment of the power flow.

In one preferred embodiment the power converter unit comprises a control circuit, which is configured to receive information about the magnitude of the instantaneous power of the first electricity network, of the second electricity network and of the drive motor of the elevator, and to selectively adjust the power flow between the first electricity network, the second electricity network and the drive motor of the elevator on the basis of the instantaneous power information received. In this way the amount of instantaneous power to be supplied can be reduced with the power converter unit always where there is momentarily a low power requirement and can also be increased where the power requirement is highest.

In one preferred embodiment an uninterruptable power source, preferably a so-called UPS power supply (Uninterruptible Power Supply), is connected to the first electricity network. The UPS power supply preferably comprises a battery pack, and the UPS power supply is configured to supply electric power from the battery pack to the first electricity network during an operating outage of the public electricity network.

Consequently, the dimensioning of the uninterruptable power supply can be reduced. In one preferred embodiment a reserve power generator is connected to the first electricity network. Consequently, the dimensioning of the reserve power generator can be reduced.

The preceding summary, as well as the additional features and additional advantages of the invention presented below, will be better understood by the aid of the following description of some embodiments, said description not limiting the scope of application of the invention.

### Brief explanation of the figures

- Fig. 1: presents a diagrammatic view of an electric power system according to a first embodiment.
- Fig. 2: presents a diagrammatic view of an electric power system according to a second embodiment.
- Fig. 3: presents in more detail a power converter unit according to the first or second embodiment.

### Detailed description

### Embodiment 1

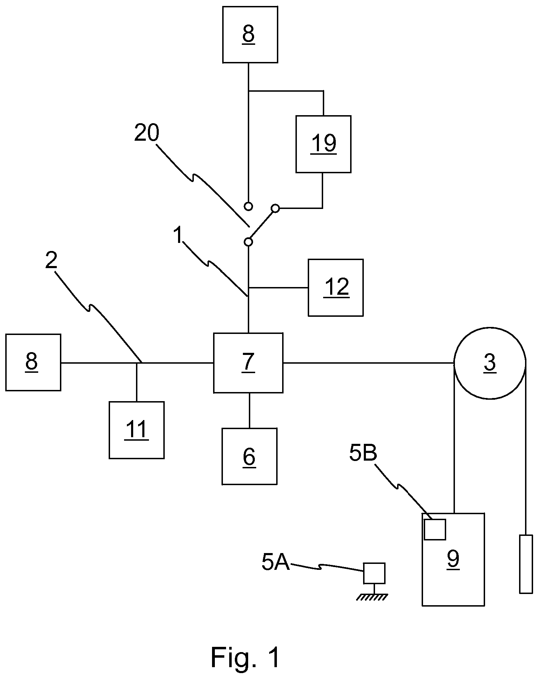

Fig. 1 presents an electric power system of a building. In the building a first electricity network 1 as well as a second electricity network 2, which are both three-phase alternating-current networks, are connected to the public electricity distribution network 8. An uninterruptable power supply 19, which is a so-called UPS (Uninterruptible Power Supply), which is provided with a battery pack, is connected between the public electricity distribution network 8 and the first electricity network 1. The battery pack is charged from the public electricity distribution network 8, and the electricity supply is maintained from the battery pack during an electricity outage occurring in the public electricity distribution network 8. The first electricity network 1 is connected to the public electricity distribution network 8 with a contactor 20 when the public electricity distribution network 8 is operating normally. The first electricity distribution network 1 is also isolated with a contactor 20 from the public electricity distribution network 8, and is connected to be supplied with the UPS power source 19 in connection with an electricity outage occurring in the public electricity distribution network 8. One UPS power supply suited for use in the embodiment of Fig. 1 is the ESM-type reserve power system manufactured by ABB Corporation.

The loads 12 intended to be supplied in an uninterrupted manner are connected to the first electricity network 1 and other electrical loads 11 of the building are connected to the second electricity network 2. The loads that are connected to the first electricity network 1 and intended to be supplied in an uninterrupted manner can be e.g. data servers and/or an electrical safety system of the building. An electrical safety system of the building can comprise e.g. an emergency telephone system, emergency lighting, an intruder alarm apparatus, a surveillance camera apparatus, an electrical/electronic locking system and/or an electronic location apparatus.

The loads 11 to be connected to the second electricity network 2 can be e.g. the luminaires, air-conditioning devices, heating devices of the building as well as various household and consumer electronics devices. When selecting the loads 11 to be connected to the second electricity network 2, it must be taken into account that the electricity supply of these loads 11 might from time to time disconnect in connection with an electricity outage occurring in the public electricity distribution network 8.

The electric power system comprises a power converter unit 7, which is connected to the first electricity network 1, to the second electricity network 2 and to the drive motor 3 of the elevator that is in the building.

The elevator car 9 is driven in the elevator hoistway with a drive motor 3 via rope traction or belt traction, on the basis of elevator calls to be given with call-giving devices 5A, 5B disposed in the elevator car as well as on the stopping floors. The speed of the elevator car 9 is adjusted to be according to the target value for the speed of the elevator car 9 calculated by the elevator control unit 6. The speed of the elevator car 9 is adjusted by adjusting the flow of electric power to the drive motor 3 of the elevator with the power converter unit 7.

Fig. 1 presents for the sake of clarity only one elevator drive motor 3, but of course there can also be a number of elevators/drive motors 3 in the building, in which case each drive motor of an elevator is in this case connected separately to the power converter unit 7 in such a way that the supply of electric power to each drive motor of an elevator can be controlled separately.

The power converter unit 7 is configured to supply electric power selectively between the first electricity network 1, the second electricity network 2 and the drive motor 3 of the elevator in such a way that electric power can be supplied from the first electricity network 1 to the second electricity network 2 and also to the drive motor 3 of the elevator according to the power requirement. The power converter unit 7 is configured to supply electric power according to need from the drive motor 3 of an elevator to the second electricity network 2 during motor braking of the elevator. During motor braking of an elevator the drive motor 3 of the elevator acts as a generator, converting the mechanical energy of the elevator back into electrical energy. The electrical energy being formed during motor braking of the elevator can be utilized by means of the power converter unit 7 as a source of electrical energy for the loads 11 connected to the second electricity network 2, which improves the efficiency ratio of the whole electric power system. In the embodiment of Fig. 1 the supply of electric power with the power converter unit 7 towards the first electricity network 1 is completely prevented. The supply of electric power towards the first electricity network 1 is prevented so that, *inter alia*, the operation of the UPS power supply 19 would not be disturbed. In some embodiments the current being supplied to the public electricity distribution network 8 is monitored with a special monitoring relay, which permits only a small amount of current supply from the first electricity network 1 to the public electricity distribution network 8. In some other embodiments the supply of electric power via the first electricity network 1 to the public electricity distribution network 8 is limited to the limit value set by the dimensioning of the main fuse that is between the first electricity network 1 and the public electricity distribution network 8.

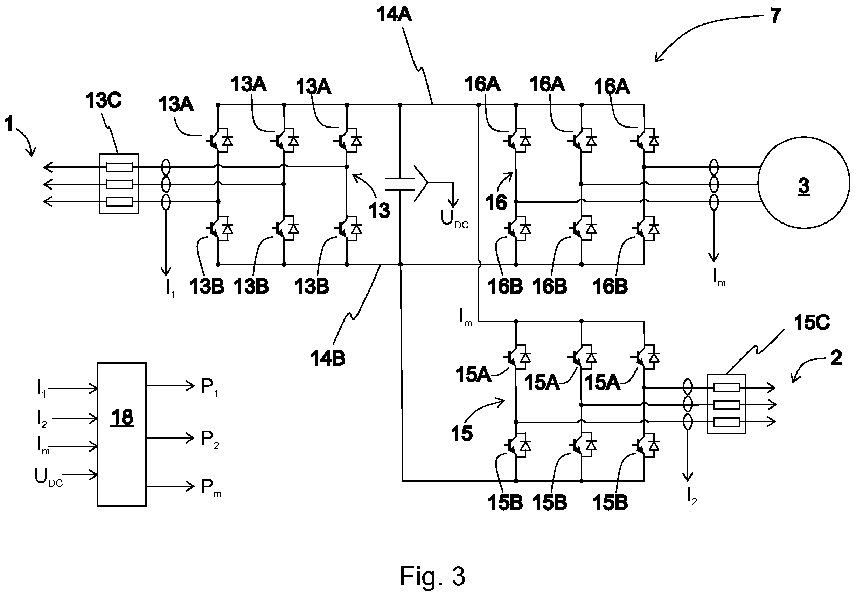

The configuration of the power converter unit 7 is presented in more detail in Fig. 3. The power converter unit 7 comprises a direct-current intermediate circuit 14A, 14B, into which are fitted controllable IGBT transistors 13A, 13B, 15A, 15B, 16A, 16B in bridge circuits 13, 15, 16, with which the power flow occurring via the power converter unit 7 can be steplessly adjusted, by switching the IGBT transistors 13A, 13B, 15A, 15B, 16A, 16B with a switching reference according to pulse width modulation. Instead of IGBT transistors other suitable solid-state switches can, of course, be used, such as MOSFET transistors, bipolar transistors or corresponding.

The power converter unit 7 comprises a control unit 18, with which the intermediate circuit voltage U_{DC}, the current I₁ of the first electricity network 1, the current I₂ of the second electricity network 2 and the current Iₘ of the drive motor 3 of the elevator are measured. The control unit 18 determines the instantaneous powers of the first electricity network 1, of the second electricity network 2 and of the drive motor 3 of the elevator on the basis of the measured currents/voltages and adjusts the power flow occurring via the power converter unit 7 by forming switching references for the IGBT transistors 13A, 13B, 15A, 15B, 16A, 16B on the basis of the determined instantaneous power information.

The power flow from the first electricity network 1 via the choke unit 13C to the direct-current intermediate circuit 14A, 14B is adjusted by connecting the IGBT transistors 13A, 13B of the bridge circuit 13 with a switching reference according to the modulation index M₁₃ calculated for them. The control unit 18 determines the instantaneous power P₁ of the first electricity network 1 on the basis of the current I₁, of the intermediate circuit voltage U_{DC} and of the input of the modulation index M₁₃ of the IGBT transistors 13A, 13B: *P*₁ = *I*₁ · *U_{DC} · M*₁₃.

Modulation index means the ratio of the on-time of the IGBT transistors to the cycle time, which ratio receives a value in the range 0...1. The modulation index receives the value zero when the IGBT transistors 13A, 15A, 16A of the upper branch do not conduct at all, and the value 1 when the aforementioned IGBT transistors 13A, 15A, 16A are continuously conductive.

The power flow from the direct-current intermediate circuit 14A, 14B via the choke unit 15C to the second electricity network 2 is adjusted by connecting the IGBT transistors 15A, 15B of the bridge circuit 15 with a switching reference according to the modulation index M₁₅ calculated for them. The control unit 18 determines the instantaneous power P₂ of the second electricity network 2 on the basis of the current I₂, of the intermediate circuit voltage U_{DC} and of the input of the modulation index M₁₅ of the IGBT transistors 15A, 15B: *P*₂ = *I*₂ . *U_{DC}* · *M*₁₅.

The power flow from the direct-current intermediate circuit 14A, 14B to the drive motor 3 of the elevator and also from the drive motor 3 of the elevator to the direct-current intermediate circuit 14A, 14B is adjusted by connecting the IGBT transistors 16A, 16B of the bridge circuit 16 with a switching reference according to the modulation index M₁₆ calculated for them. The control unit 18 determines the instantaneous power Pₘ of the drive motor 3 of the elevator on the basis of the current Iₘ, of the intermediate circuit voltage U_{DC} and of the input of the modulation index M₁₆ of the IGBT transistors 16A, 16B: *Pₘ* = *_{Im} · U_{DC} · M*₁₆.

A DC/DC transformer is also connected to the intermediate circuit 14A, 14B of the power converter unit 7, with which transformer a supply voltage for the elevator control unit 6 and for the safety apparatus of the elevator is formed.

During an electricity outage of the public electricity distribution network 8 the power converter unit 7 supplies electric power from the accumulator of the UPS power supply 19 via the first electricity network 1 to the second electricity network 2 and also to the drive motor 3 of the elevator without limit until the instantaneous power P₁ of the first electricity network 1 grows to the magnitude of the set threshold value. The aforementioned threshold value is determined on the basis of the power supply capacity of the UPS power supply 19. When the instantaneous power P₁ of the first electricity network 1 grows to the magnitude of the threshold value the power converter unit 7 starts to limit the electric power being supplied from the first electricity network 1 to the second electricity network 2 and also to the drive motor 3 of the elevator. If the instantaneous power P₂ of the second electricity network 2 is so large that the instantaneous power P₁ of the first electricity network 1 can be brought to be lowered sufficiently below the aforementioned threshold value just by reducing the power supply to the second electricity network 2, the power converter unit 7 reduces the flow of electric power from the first electricity network 1 to the second electricity network 2 but continues the power supply from the first electricity network 1 to the drive motor 3 of the elevator as before. If the instantaneous power P₂ of the second electricity network 2 is already so small that the instantaneous power P₁ of the first electricity network 1 can be brought to be reduced sufficiently just by reducing the power flow to the second electricity network 2, the power converter unit 7 also reduces the power being supplied to the drive motor 3 of the elevator by dropping the run speed of the drive motor 3 of the elevator.

During motor braking of the elevator the direction of the power flow, and consequently the polarity of the instantaneous power Pₘ of the drive motor 3 of the elevator, changes. In this case the power converter unit 7 starts to supply electric power from the drive motor 3 of the elevator to the second electricity network 2.

### Embodiment 2

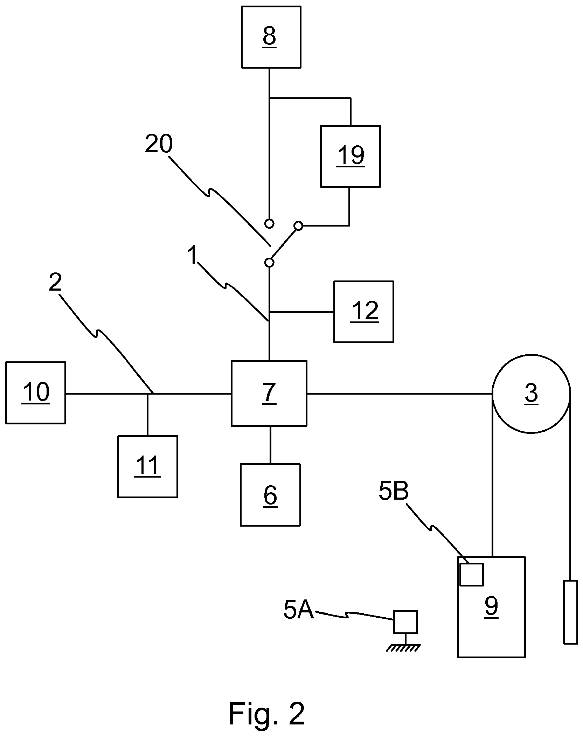

The embodiment of Fig. 2 differs from the embodiment of Fig. 1 in such a way that a solar panel 10, instead of a public electricity distribution network 8, is connected to the second electricity network 2 as a source of electric power. In addition to, or instead of, a solar panel, e.g. a generator functioning with wind power or another electricity source functioning with renewable energy could also be used as a source of electric power to be connected to the second electricity network 2.

The loads 12 intended to be supplied in an uninterrupted manner are connected to the first electricity network 1 and the electrical loads 11 to be supplied with a solar panel 10 are connected to the second electricity network 2. Since the yield of electric power varies with a solar panel according to solar radiation conditions, an accumulator is connected to the solar panel, which accumulator is always charged by the solar panel when solar radiation energy is sufficiently available. The accumulator is connected to an inverter, which makes alternating voltage from the accumulator of the solar panel 10 for the second electricity network 2. In this embodiment of the invention the first electricity network 1 is a three-phase, alternating-current network, whereas the second electricity network 2 can be, according to the power requirement, either a single-phase or a three-phase alternating-current network.

When selecting the loads 11 to be connected to the second electricity network 2, it must be taken into account that the electricity supply of the loads 11 to be supplied with a solar panel 10 might from time to time disconnect.

In the embodiment of Fig. 2 the power converter unit 7 according to Fig. 3 comprises the same functionality as presented above in the embodiment of Fig. 1. In addition to this, the power converter unit 7 is configured to supply electric power from the second electricity network 2 to the drive motor 3 of an elevator in a situation in which the electric power being received from the solar panel exceeds the power requirement of the loads 11 connected to the second electricity network 2. In other words, electric power can be supplied via the power converter unit 7 both to the second electricity network 2 as well as in the opposite direction away from the second electricity network. In this way at least some of the electric power needed by the drive motor of the elevator can be formed with a solar panel, which improves the efficiency ratio of the electric power system according to Fig. 2. Utilizing a solar panel as an energy source for the second electricity network 2/the drive motor 3 of an elevator also reduces the loading exerted on the UPS power supply 19 during an electricity outage of the public electricity distribution network 8.

In one embodiment of the invention a data transfer bus is arranged between the solar panel 10 and the power converter unit 7, via which bus the solar panel 10 sends information about its operating state to the power converter unit 7, i.e. about the quantity of electric power available from the solar panel. The power converter unit 7 adjusts the power flow occurring via the power converter unit 7 utilizing in the power adjustment the aforementioned information about the operating state of the solar panel 10.

The invention is not only limited to be applied to the embodiments described above, but instead many variations are possible within the scope of the invention defined by the claims.

## Claims

1. Electric power system in a building, in which is a first electricity network (1) connected to a public electricity distribution network (8) and provided with a reserve power device, e.g. an uninterruptable power supply (19) connected to the first electricity network (1) or a reserve power generator connected to the first electricity network (1), as well as a second electricity network (2), which at least during an electricity outage of the public electricity distribution network is isolated from the first electricity network (1) in such a way that in this case a direct and uncontrolled flow of electric power does not occur from the first electricity network (1) to the second electricity network (2),
which electric power system comprises a drive motor (3) of an elevator, which motor is configured to drive an elevator car (9) in an elevator hoistway in response to elevator calls;
**characterized in that** the electric power system comprises a power converter unit (7), which is connected to the first electricity network (1), to the second electricity network (2) and to the drive motor (3) of the elevator and is configured to supply electric power selectively between the first electricity network (1), the second electricity network (2) and the drive motor (3) of the elevator and to prevent the supply of electric power to the first electricity network (1), wherein the power converter unit (7) is configured to supply electric power selectively from the drive motor (3) of the elevator to the second electricity network (2) during motor braking of the elevator.

2. Electric power system according to claim 1, **characterized in that** the power converter unit (7) is configured to supply electric power from the first electricity network (1) to the drive motor (3) of the elevator but to prevent the electricity supply from the second electricity network (2) to the drive motor of the elevator during an electricity outage of the public electricity distribution network to supply electric power with the reserve power device to the drive motor (3) of the elevator without overloading the reserve power device.

3. Electric power system according to any of the preceding claims, **characterized in that** the power converter unit (7) is configured to supply electric power selectively from the first electricity network (1) to the second electricity network (2) and also to the drive motor (3) of the elevator.

4. Electric power system according to any of the preceding claims, **characterized in** being configured such that the supply of electric power via the first electricity network (1) to the public electricity distribution network (8) is limited to a limit value set by the dimensioning of a main fuse that is between the first electricity network (1) and the public electricity distribution network (8).

5. Electric power system according to any of the preceding claims, **characterized in that** one or more electricity sources (10) functioning with renewable energy are connected to the second electricity network (2).

6. Electric power system according to claim 5, **characterized in that** the power converter unit (7) is equipped to supply electric power selectively from the second electricity network (2) to the drive motor (3) of the elevator when renewable energy is available.

7. Electric power system according to any of the preceding claims, **characterized in that** loads (11) external to the elevator system are connected to the second electricity network (2).

8. Electric power system according to any of the preceding claims, **characterized in that** a safety system (12) of the building is connected to the first electricity network (1).

9. Electric power system according to any of the preceding claims, **characterized in that** the power converter unit (7) comprises controllable power semiconductors (13A, 13B, 15A, 15B, 16A, 16B) for adjusting the power flow occurring via the power converter unit (7).

10. Electric power system according to any of the preceding claims, **characterized in that** the power converter unit (7) comprises a control circuit (8), which is configured to receive information about the magnitude of the instantaneous power of the first electricity network (1), of the second electricity network (2) and of the drive motor (3) of the elevator, and to selectively adjust the power flow between the first electricity network (1), the second electricity network (2) and the drive motor (3) of the elevator on the basis of the instantaneous power information received.

11. Electric power system according to any of the preceding claims, **characterized in that** the reserve power device is an uninterruptable power supply (19) which is connected to the first electricity network (1).

12. Electric power system according to claim 11, **characterized in that** the power convertor unit (7) is configured to prevent the supply of electric power towards the first electricity network (1) so that the operation of the uninterruptable power supply (19) is not disturbed.

13. Electric power system according to any of claims 1 - 10, **characterized in that** the reserve power device is a reserve power generator which is connected to the first electricity network (1).

## Patentansprüche

1. Elektrisches Stromversorgungssystem in einem Gebäude, in dem ein erstes Elektrizitätsnetz (1) vorliegt, das an ein öffentliches Elektrizitätsverteilungsnetz (8) angeschlossen ist und mit einer Reserve-Stromeinrichtung, z.B. einer an das erste Stromnetz (1) angeschlossenen unterbrechungsfreien Stromversorgung (19) oder einem an das erste Stromnetz (1) angeschlossenen Reservestromerzeuger versehen ist, sowie ein zweites Stromnetz (2) vorliegt, das zumindest während eines Stromausfalls des öffentlichen Stromverteilungsnetzes vom ersten Stromnetz (1) derart isoliert ist, dass in diesem Fall kein direkter und unkontrollierter Stromfluss vom ersten Stromnetz (1) zum zweiten Stromnetz (2) erfolgt,
welches elektrisches Stromversorgungssystem einen Antriebsmotor (3) eines Aufzugs umfasst, welcher Motor konfiguriert ist, um eine Aufzugskabine (9) in einem Aufzugsschacht in Reaktion auf Aufzugsrufe anzutreiben,
**dadurch gekennzeichnet, dass** das elektrische Stromversorgungssystem eine Stromrichtereinheit (7) umfasst, die mit dem ersten Elektrizitätsnetz (1), dem zweiten Elektrizitätsnetz (2) und dem Antriebsmotor (3) des Aufzugs verbunden ist und so konfiguriert ist, dass sie elektrische Leistung selektiv zwischen dem ersten Elektrizitätsnetz (1), dem zweiten Stromnetz (2) und dem Antriebsmotor (3) des Aufzugs versorgt und die Versorgung des ersten Stromnetzes (1) mit elektrischer Energie verhindert, wobei die Stromrichtereinheit (7) so konfiguriert ist, dass sie während des Motorbremsens des Aufzugs selektiv elektrische Energie vom Antriebsmotor (3) des Aufzugs zum zweiten Stromnetz (2) liefert.

2. Elektrisches Stromversorgungssystem nach Anspruch 1, **dadurch gekennzeichnet, dass** die Stromrichtereinheit (7) so konfiguriert ist, dass sie dem Antriebsmotor (3) des Aufzugs elektrische Energie aus dem ersten Stromnetz (1) zuführt, aber die Stromzufuhr aus dem zweiten Stromnetz (2) zum Antriebsmotor des Aufzugs während eines Stromausfalls des öffentlichen Stromverteilungsnetzes verhindert, um dem Antriebsmotor (3) des Aufzugs elektrische Energie mit der Reservestromeinrichtung zuzuführen, ohne die Reservestromeinrichtung zu überlasten.

3. Elektrisches Stromversorgungssystem nach einem der vorhergehenden Ansprüche, **dadurch gekennzeichnet, dass** die Stromrichtereinheit (7) so konfiguriert ist, dass sie elektrische Energie selektiv vom ersten Stromnetz (1) zum zweiten Stromnetz (2) und auch zum Antriebsmotor (3) des Aufzugs liefert.

4. Elektrisches Stromversorgungssystem nach einem der vorhergehenden Ansprüche, **dadurch gekennzeichnet, dass** es so konfiguriert ist, dass die Zufuhr von elektrischer Energie über das erste Elektrizitätsnetz (1) zu dem öffentlichen Elektrizitätsverteilungsnetz (8) auf einen Grenzwert begrenzt ist, der durch die Dimensionierung einer Hauptsicherung festgelegt ist, die sich zwischen dem ersten Elektrizitätsnetz (1) und dem öffentlichen Elektrizitätsverteilungsnetz (8) befindet.

5. Elektrisches Stromversorgungssystem nach einem der vorhergehenden Ansprüche, **dadurch gekennzeichnet, dass** eine oder mehrere mit erneuerbarer Energie arbeitende Stromquellen (10) an das zweite Stromnetz (2) angeschlossen sind.

6. Elektrisches Stromversorgungssystem nach Anspruch 5, **dadurch gekennzeichnet, dass** die Stromrichtereinheit (7) so ausgestattet ist, dass sie dem Antriebsmotor (3) des Aufzugs selektiv elektrische Energie aus dem zweiten Stromnetz (2) zuführt, wenn erneuerbare Energie verfügbar ist.

7. Elektrisches Stromversorgungssystem nach einem der vorhergehenden Ansprüche, **dadurch gekennzeichnet, dass** Lasten (11) außerhalb des Aufzugssystems an das zweite Stromnetz (2) angeschlossen sind.

8. Elektrisches Stromversorgungssystem nach einem der vorhergehenden Ansprüche, **dadurch gekennzeichnet, dass** ein Sicherheitssystem (12) des Gebäudes an das erste Stromnetz (1) angeschlossen ist.

9. Elektrisches Stromversorgungssystem nach einem der vorhergehenden Ansprüche, **dadurch gekennzeichnet, dass** die Stromrichtereinheit (7) steuerbare Leistungshalbleiter (13A, 13B, 15A, 15B, 16A, 16B) zur Einstellung des über die Stromrichtereinheit (7) erfolgenden Leistungsflusses aufweist.

10. Elektrisches Stromversorgungssystem nach einem der vorhergehenden Ansprüche, **dadurch gekennzeichnet, dass** die Stromrichtereinheit (7) eine Steuerschaltung (8) umfasst, die so konfiguriert ist, dass sie Informationen über die Größe der Momentanleistung des ersten Stromnetzes (1), des zweiten Stromnetzes (2) und des Antriebsmotors (3) des Aufzugs empfängt und den Leistungsfluss zwischen dem ersten Stromnetz (1), dem zweiten Stromnetz (2) und dem Antriebsmotor (3) des Aufzugs auf der Grundlage der empfangenen Momentanleistungsinformationen selektiv einstellt.

11. Elektrisches Stromversorgungssystem nach einem der vorhergehenden Ansprüche, **dadurch gekennzeichnet, dass** die Reserve-Stromeinrichtung eine unterbrechungsfreie Stromversorgung (19) ist, die mit dem ersten Elektrizitätsnetz (1) verbunden ist.

12. Elektrisches Stromversorgungssystem nach Anspruch 11, **dadurch gekennzeichnet, dass** die Leistungsumwandlungseinheit (7) so konfiguriert ist, dass sie die Zufuhr von elektrischer Energie in Richtung des ersten Stromnetzes (1) verhindert, so dass der Betrieb der unterbrechungsfreien Stromversorgung (19) nicht gestört wird.

13. Elektrisches Stromversorgungssystem nach einem der Ansprüche 1 bis 10, **dadurch gekennzeichnet, dass** die Reserveleistungseinrichtung ein Reserveleistungsgenerator ist, der an das erste Stromnetz (1) angeschlossen ist.

## Revendications

1. Système d'énergie électrique dans un bâtiment, dans lequel se trouvent un premier réseau d'électricité (1) connecté à un réseau public de distribution d'électricité (8) et pourvu d'un dispositif d'alimentation de réserve, par exemple, une alimentation sans interruption (19) connectée au premier réseau d'électricité (1) ou un générateur d'énergie de réserve connecté au premier réseau d'électricité (1), ainsi qu'un second réseau d'électricité (2) qui, au moins au cours d'une indisponibilité du réseau public de distribution d'électricité, est isolé du premier réseau d'électricité (1) de telle sorte que dans ce cas, un flux direct et non commandé de puissance électrique ne se produit pas du premier réseau d'électricité (1) au second réseau d'électricité (2),
lequel le système d'énergie électrique comprend un moteur d'entraînement (3) d'ascenseur, lequel moteur est conçu pour entraîner une cabine d'ascenseur (9) dans une gaine d'ascenseur, en réponse à des appels d'ascenseur ;
**caractérisé en ce que** le système d'énergie électrique comprend une unité de conversion de puissance (7) qui est connectée au premier réseau d'électricité (1), au second réseau d'électricité (2) et au moteur d'entraînement (3) de l'ascenseur et qui est conçue pour fournir de l'énergie électrique de façon sélective entre le premier réseau d'électricité (1), le second réseau d'électricité (2) et le moteur d'entraînement (3) de l'ascenseur et pour empêcher la fourniture d'une énergie électrique au premier réseau d'électricité (1), dans lequel l'unité de conversion de puissance (7) est conçue pour fournir de l'énergie électrique de façon sélective du moteur d'entraînement (3) de l'ascenseur au second réseau d'électricité (2) au cours du freinage du moteur de l'ascenseur.

2. Système d'énergie électrique, selon la revendication 1, **caractérisé en ce que** l'unité de conversion de puissance (7) est conçue pour fournir de l'énergie électrique, du premier réseau d'électricité (1) au moteur d'entraînement (3) de l'ascenseur, mais pour empêcher la fourniture d'électricité du second réseau d'électricité (2) au moteur d'entraînement de l'ascenseur au cours d'une indisponibilité du réseau public de distribution d'électricité afin de fournir de l'énergie électrique, au moyen du dispositif d'alimentation de réserve, au moteur d'entraînement (3) de l'ascenseur, sans surcharger le dispositif d'alimentation de réserve.

3. Système d'énergie électrique, selon l'une quelconque des revendications précédentes, **caractérisé en ce que** l'unité de conversion de puissance (7) est conçue pour fournir de l'énergie électrique de façon sélective, du premier réseau d'électricité (1) au second réseau d'électricité (2) et également au moteur d'entraînement (3) de l'ascenseur.

4. Système d'énergie électrique, selon l'une quelconque des revendications précédentes, **caractérisé en ce qu'**il est conçu de telle sorte que la fourniture d'une énergie électrique, par le biais du premier réseau d'électricité (1), au réseau public de distribution d'électricité (8) est limitée à une valeur limite établie par le dimensionnement d'un fusible principal qui se trouve entre le premier réseau d'électricité (1) et le réseau public de distribution d'électricité (8).

5. Système d'énergie électrique, selon l'une quelconque des revendications précédentes, **caractérisé en ce qu'**une ou plusieurs source(s) d'électricité (10) fonctionnant avec une énergie renouvelable est ou sont connectée(s) au second réseau d'électricité (2).

6. Système d'énergie électrique, selon la revendication 5, **caractérisé en ce que** l'unité de conversion de puissance (7) est équipée pour fournir de l'énergie électrique de façon sélective, du second réseau d'électricité (2) au moteur d'entraînement (3) de l'ascenseur lorsque de l'énergie renouvelable est disponible.

7. Système d'énergie électrique, selon l'une quelconque des revendications précédentes, **caractérisé en ce que** des charges (11) extérieures au système d'ascenseur sont connectées au second réseau d'électricité (2).

8. Système d'énergie électrique, selon l'une quelconque des revendications précédentes, **caractérisé en ce qu'**un système de sécurité (12) du bâtiment est connecté au premier réseau d'électricité (1).

9. Système d'énergie électrique, selon l'une quelconque des revendications précédentes, **caractérisé en ce que** l'unité de conversion de puissance (7) comprend des semi-conducteurs de puissance pouvant être commandés (13A, 13B, 15A, 15B, 16A, 16B) permettant d'ajuster le flux de puissance se produisant par le biais de l'unité de conversion de puissance (7).

10. Système d'énergie électrique, selon l'une quelconque des revendications précédentes, **caractérisé en ce que** l'unité de conversion de puissance (7) comprend un circuit de commande (8) qui est conçu pour recevoir des informations au sujet de la grandeur de la puissance instantanée du premier réseau d'électricité (1), du second réseau d'électricité (2) et du moteur d'entraînement (3) de l'ascenseur, et pour ajuster de façon sélective le flux de puissance entre le premier réseau d'électricité (1), le second réseau d'électricité (2) et le moteur d'entraînement (3) de l'ascenseur sur la base des informations de puissance instantanée reçues.

11. Système d'énergie électrique, selon l'une quelconque des revendications précédentes, **caractérisé en ce que** le dispositif d'alimentation de réserve est une alimentation sans interruption (19) qui est connectée au premier réseau d'électricité (1).

12. Système d'énergie électrique, selon la revendication 11, **caractérisé en ce que** l'unité de conversion de puissance (7) est conçue pour empêcher la fourniture d'une énergie électrique vers le premier réseau d'électricité (1), de manière que le fonctionnement de l'alimentation sans interruption (19) ne soit pas perturbé.

13. Système d'énergie électrique, selon l'une quelconque des revendications 1 à 10, **caractérisé en ce que** le dispositif d'alimentation de réserve est un générateur d'énergie de réserve qui est connecté au premier réseau d'électricité (1).
